# EUROPEAN PATENT SPECIFICATION

(11) **EP 1 326 758 B1**
(45) Date of publication and mention of the grant of the patent: **08.06.2005**
(21) Application number: 01988343.8
(22) Date of filing: 20.10.2001
(51) Int. Cl.: B60J 7/20, B60J 7/12, B60J 7/14

(54) **FOLDING CONVERTIBLE TOP WITH INTEGRAL BOOT**
FALTBARES CABRIOVERDECK MIT INTEGRALER SCHUTZABDECKUNG
CAPOTE PLIABLE AVEC COFFRE INTEGRE

(30) Priority: 20.10.2000 US 242281 P
(43) Date of publication of application: 16.07.2003
(73) Proprietor: Dura Convertible Systems, Inc., Adrian, MI 49221 (US)
(72) Inventor: RAWLINGS, Stephen, P., Onsted, MI 49265 (US); HARRISON, Albert, W., III, Detriot, MI 48214 (US)
(74) Representative: Strobel, Wolfgang, Dipl.-Ing.
(86) International application number: PCT/US2001/049236
(87) International publication number: WO 2002/043978

(56) References cited:
- EP-A- 0 884 208
- EP-A- 0 936 095
- DE-A- 3 416 286
- US-A- 2 704 225
- US-A- 3 473 842
- US-A- 5 207 474
- US-A- 5 810 422
- US-A1- 2001 040 385
- US-A1- 2002 030 381
- US-B2- 6 343 829

## Description

### TECHNICAL FIELD

This invention relates to vehicle convertible tops and, more particularly, to a top having a linkage which folds a top so that the header serves as a boot to cover the top when stored.

### BACKGROUND OF THE INVENTION

Many different types of folding convertible soft and hard tops have been developed to enhance motoring pleasure by enabling a driver to selectively open and close the passenger compartment. These tops utilize a variety of different folding linkages, each of which are designed to accommodate the particular mechanical constraints of a specific vehicle application. It is desirable to utilize a top folding linkage that is simple, compact and stores the top in as little space as possible.

When these tops are lowered into a storage compartment, the header is normally inverted. This requires that the top or a portion of the top to be covered by a soft or hard boot to prevent accumulation of dust or other contaminants that would be dumped into the passenger compartment when the header rotates as the top is raised. The boot may be manually installed, or, is automatically manipulated by power operators, usually hydraulic cylinders. Installation of these boots requires time and/or effort to install. In the case of the soft boot, it requires separate storage when removed to enable the top to be raised.

It would be desirable to provide a convertible top that does not require a separate boot to close the top storage compartment, and incorporates a linkage, which stores the top in a compact configuration, with the outer surface of the header covering the remainder of the stored and folded top.

US-5,810,422, regarded as most relevant prior art document, discloses a convertible top consisting of a rigid front panel, a rigid middle panel and a rear rail which are covered by a flexible covering. In the stored position, the middle panel is inverted and lies underneath the rear rail, which in turn is covered by the front panel. Thereby, the need for a separate cover is eliminated, since the front panel functions as a cover for the stored convertible top.

US-5,207,474 (D2) shows a convertible top having a rigid front plate and a rear rail covered by a flexible covering. During the folding of the top, the rear rail is inverted and the rigid roof part is laid upon it so that it covers the folded flexible material of the top in folded position.

### SUMMARY OF THE INVENTION

It is therefore an object of this invention to provide a convertible top that does not require a separate boot to close the top storage compartment, and incorporates a linkage, which stores the top in a compact configuration, with the exterior of the header covering the remainder of the stored and folded top.

Accordingly, this invention features a convertible top and a pair of side linkages for raising the top between a raised position, covering the vehicle body passenger compartment, through a body opening, and a lowered position folded into a storage compartment within the vehicle body. The top includes a cover, a header for engaging the vehicle windshield in top raised position, and at least one crossbow extending between the side linkages to support the cover in top raised position.

Each side linkage includes a side rail pivoted to and extending rearwardly from the header and other links for folding the top in a Z-shaped folding action to a compact shape in the storage compartment such that the header is not inverted and covers the folded top and closes the body opening.

This invention also features 4-bar side linkages that enable the top to fold in the Z-shape.

Another feature of this invention is the use of a lost-motion connection between the header and a side rail to enable relative lateral movement during raising and lowering of the top.

These and other objects and features of this invention will become more readily apparent upon reference to the following detailed description of a preferred embodiment, as illustrated in the accompanying drawings, in which:

### BRIEF DESCRIPTION OF THE DRAWINGS

Figs. 1, 2, 3 and 4 are side views of a convertible top of this invention, sequentially shown in fully raised, 3/4 raised, half raised, and fully lowered and stored position;
Fig. 5 is a perspective view of the top in its Fig. 3 position;
Fig. 6 an enlarged bottom detail view of the juncture of the header and the front side rail ; and
Fig. 7 is an enlarged bottom view of a portion of Fig. 6, illustrating the flexible connection between the front side rail and the header.

### DESCRIPTION OF THE PREFERRED EMBODIMENT

Referring now to the drawings, a convertible top 10 has a conventional flexible fabric, or other similar material, cover (not illustrated) that is supported at its front by a plate-like extended header, or 1-bow, 12, and an intermediate bow 14. The cover for top 10 is conventionally attached to the vehicle body (not illustrated). Header 12 extends sufficiently rearward so as to incorporate what would normally be an intermediate 2-bow.

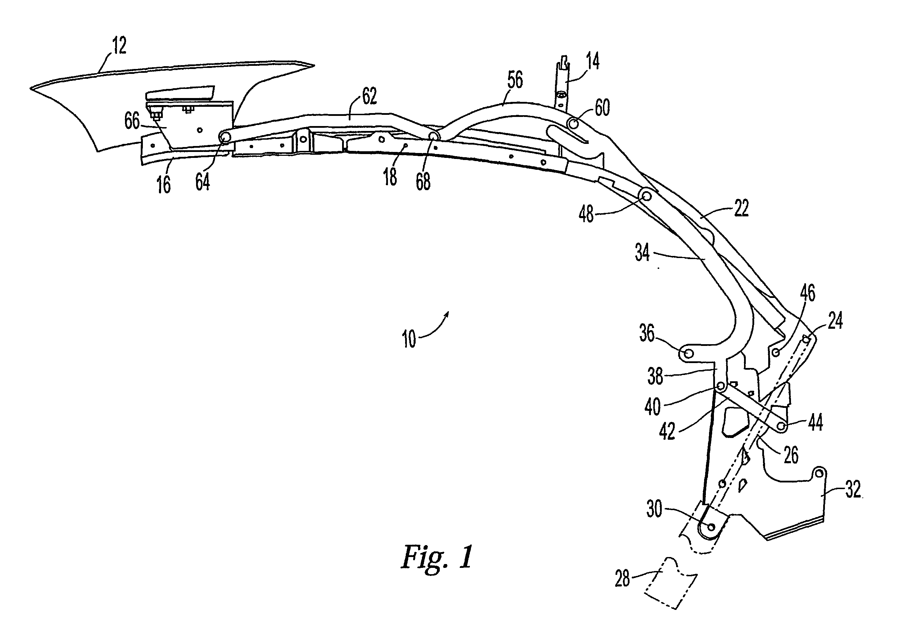

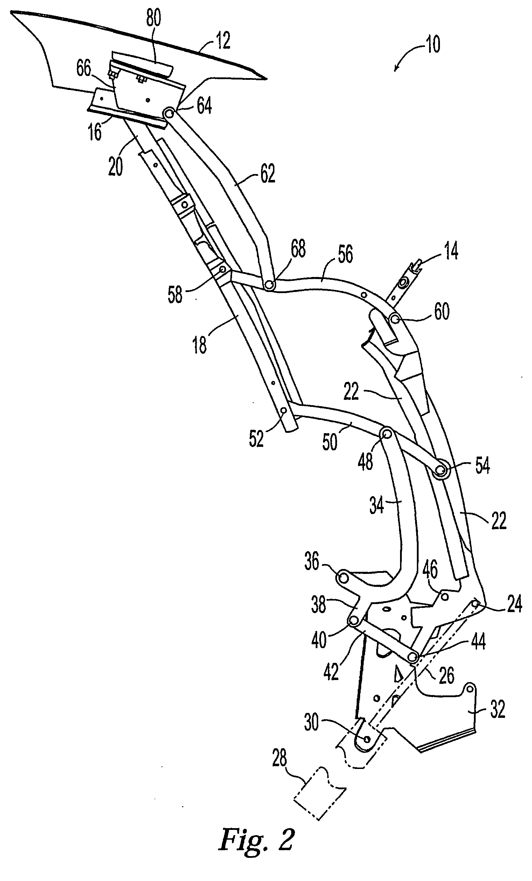

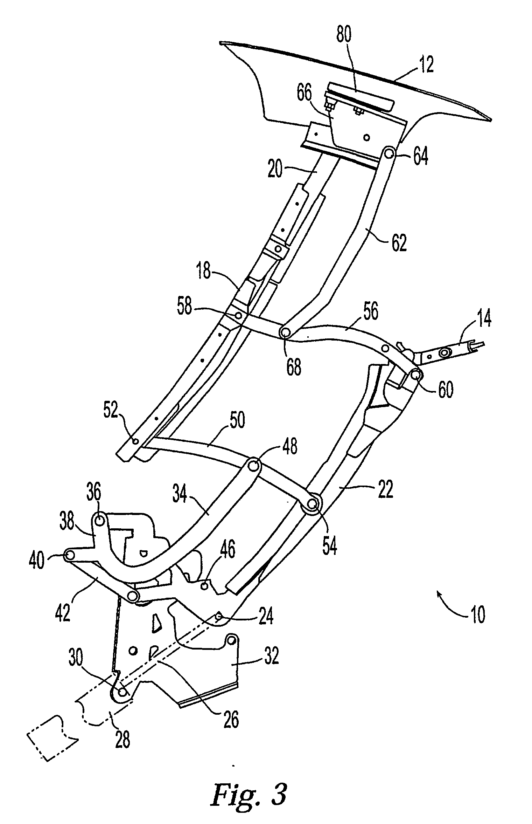

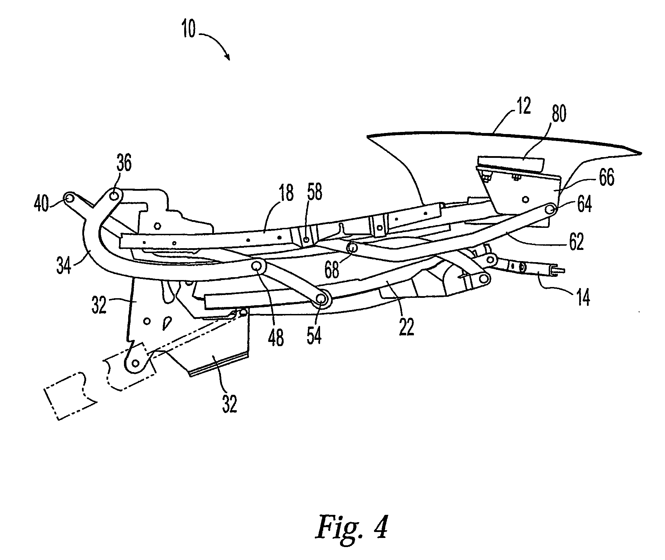

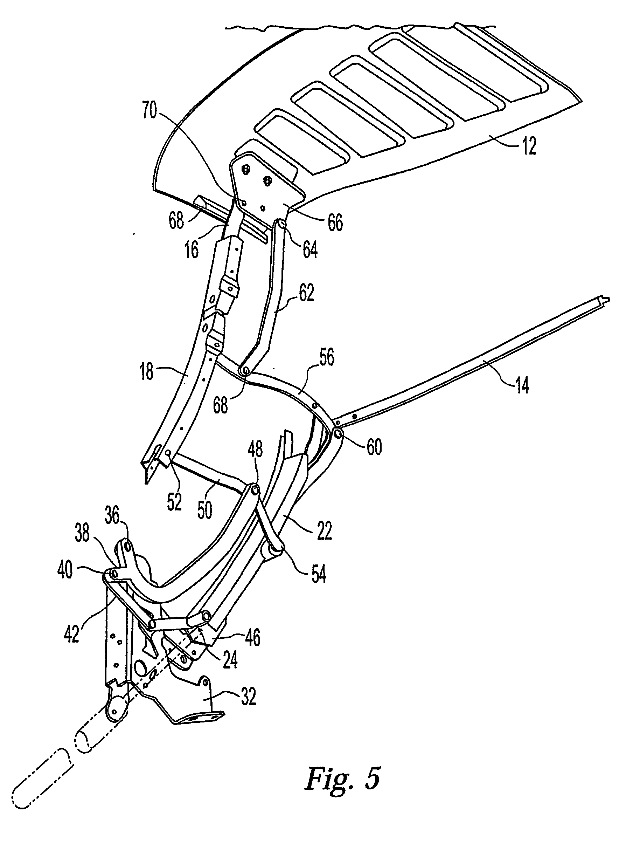

These supporting bows are pivotally connected at each side by an articulated linkage, which is conventionally operable by hydraulic cylinders, or other means (not shown) to raise and lower the top between an extended raised position covering the vehicle passenger compartment (not illustrated), as shown in Fig. 1, through the intermediate positions shown in Figs. 2, 3 and 5, and a lowered and folded position, as shown in Fig. 4, within a storage compartment in a vehicle body (not illustrated).

Only one articulated side linkage is illustrated, since both are identical/symmetrical. The linkages comprise a front rail 16 that is secured to, and moves with header 12. A middle rail 18 has a forward extension 20 that is connected to front rail 16, as will be later described.

A rear rail 22 is pivoted adjacent its lower end at 24 to the rod 26 of a hydraulic cylinder 28, which is pivoted at 30 to a body-mounted mounting bracket 32.

A lower control arm 34 is pivoted to bracket 32 at 36 and has an arm 38 that pivotally mounts one end 40 of a lower connecting link 42 that is pivoted at its other end 44 to the lower end 46 of rear rail 22.

The upper end of lower control arm 34 is pivoted at 48 intermediate the ends of a middle connecting link 50 that has one end pivoted at 52 to middle rail 18 and its other end pivoted at 54 to an intermediate portion of rear rail 22.

The upper end of an upper connecting link 56 is pivoted at 58 to an intermediate portion of middle side rail 18, while its other end is pivoted to the upper end of rear rail 22 at 60. An upper control arm 62 is pivoted at 64 to a header-mounted bracket 66, and to an intermediate portion of upper connecting link 56 at 68.

The linkage just described, of course, is duplicated on the other side of the vehicle. It comprises three four-bar linkages that allow the top 10 to fold into a very compact, layered arrangement. As can be seen from viewing the folding sequence illustrated in Figs. 1, 2, 3 and 4, top 10 folds into the form of a collapsed "Z". This is enabled by employing the four-bar linkages. The first linkage is formed by header 12, extension 20 of middle rail 18, upper control arm 62 and the upper portion of upper connecting link 56, as defined by pivots 64, 68, 58 and the connection 70 between extension 20 of middle rail 18 and front rail 16.

The second four-bar linkage comprises upper connecting link 56, the lower portion of middle rail 18, middle connecting link 50 and the upper portion of rear rail 22, as defined by pivots 58, 52, 54 and 60.

The third four-bar linkage is formed by the lower portion of middle connecting link 50, lower control arm 34, lower connecting link 42 and the lower portion of rear rail 22, as defined by pivots 48, 40, 44 and 54.

Thus, the entire top 10 moves about body linkage pivot 36 and cylinder pivot 30, as controlled by cylinder 28 and the three four-bar linkages described above. This Z-fold provides a more compact arrangement requiring less space within the vehicle body than prior arrangements, while also enabling the extended header to cover the folded top and eliminate the necessity of using a separate boot cover.

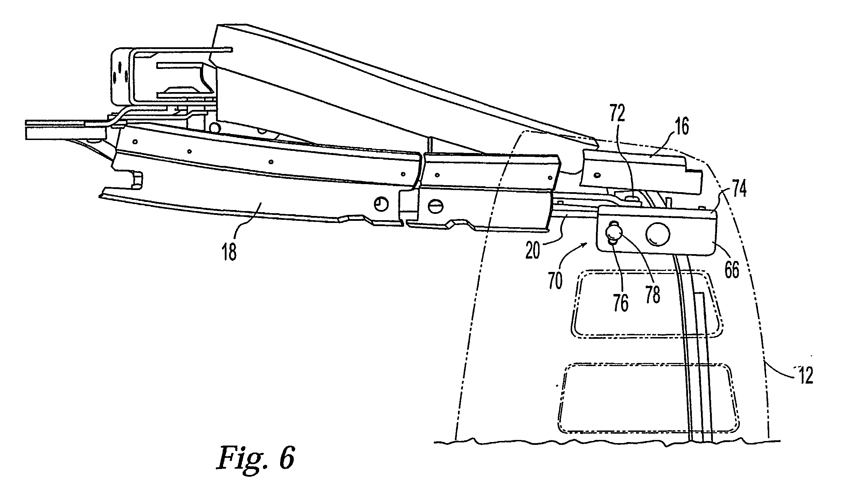

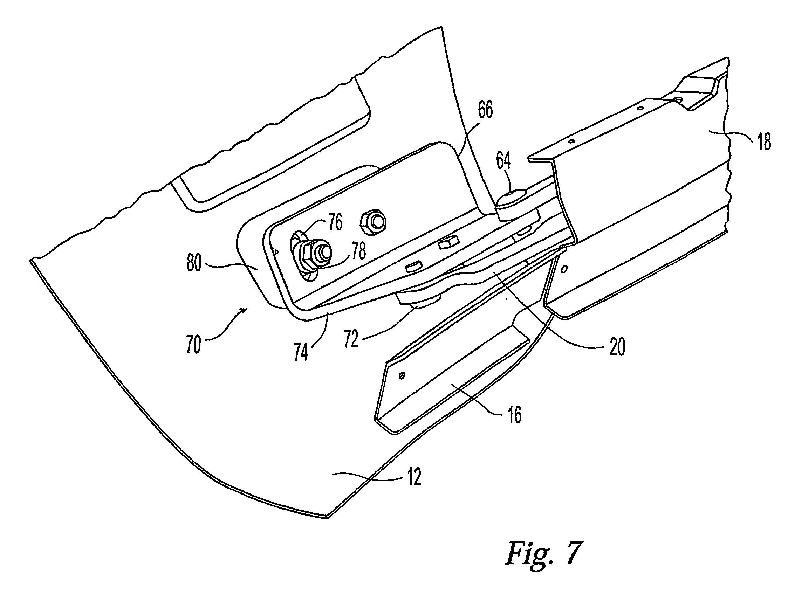

To enable, this linear Z-type folding movement of top 10, accommodation must be made for lateral movement of the side linkage relative to the header. The mechanism 70 for enabling this lateral flexibility is shown in Figs. 6 and 7. Middle rail extension 20 is pivoted at 72 to one flange 74 of bracket 66. The other bracket flange contains an elongated slot 76, which receives a stud 78 mounted on a pad 80 on header 12. With this lost motion connection 70, middle rail 18, and the remainder of the side linkage, to pivotally move laterally of header 12, which is necessary to enable top 10 to fold in the above-described manner.

While only a preferred embodiment has been described and shown, obvious modifications are contemplated within the scope of this invention, as defined by the following claims

## Claims

1. Convertible top (10) to be moved through a body opening between a raised position, covering the vehicle body passenger compartment, and a lowered position folded into a storage compartment within the vehicle body, said top including a header (12) for engaging the vehicle windshield in top raised position and a pair of side linkages and at least one crossbow (14) extending between the side linkages, each linkage comprising a front rail (16), a middle rail (18), a rear rail (22), and a plurality of links (34, 50, 56, 62) connecting the header (12), the front rail (16), the middle rail (18), the rear rail (20) and the crossbows (14) for folding the top (10) in a Z-shaped folding action to a compact shape in the storage compartment such that the header (12) is not inverted and covers the folded top (10) and closes the body opening,
**characterised in that**
the middle and rear rails (18, 22) are inverted during the folding action.

2. The convertible top of claim 1, wherein each side linkage includes a 4-bar linkage to accomplish the Z-shaped fold.

3. The convertible top of claim 1, wherein each side linkage includes two 4-bar linkages to enable the Z-folding action.

4. The convertible top of claim 1, wherein each side linkage includes three 4-bar linkages.

5. The convertible top according to one of the preceeding claims, including a lost motion connection between a side rail and the header (12) to enable relative lateral movement during folding and unfolding of the top (10).

6. The convertible top according to one of the preceeding claims, wherein the front rail (16) is mounted on the header (12), the middle rail (18) is pivoted to the header (12), the rear rail (22) is pivotally connected to the vehicle and spaced upper and middle connecting links (56, 50) interconnecting the middle and rear rails (18, 22) to form a 4-bar linkage.

7. The convertible top according to one of claims 3 to 6, wherein each side linkage includes an upper control arm (62) interconnecting the upper connecting link (56) and the header (12) to form a second 4-bar linkage.

8. The convertible top according to one of claims 4 to 7, wherein each side linkage includes a lower control arm (34) connecting the middle connecting link (50) and the vehicle body and a lower connecting link (42) connecting the rear rail (22) and the lower control arm (34) to form a third 4-bar linkage.

## Patentansprüche

1. Cabrioverdeck (10), das durch eine Karosserieöffnung zwischen einer ausgefahrenen Stellung, in der es die Fahrgastzelle der Fahrzeugkarosserie verdeckt, und einer abgesenkten Stellung, bei der es in einem Aufbewahrungsfach in der Fahrzeugkarosserie zusammengefaltet ist, bewegbar ist, mit einem Kopfstück (12) zum Eingriff mit der Windschutzscheibe des Fahrzeugs bei ausgefahrener Stellung und einem Paar von Seitengestängen sowie wenigstens einem Querbügel (14), der sich zwischen den Seitengestängen erstreckt, wobei jedes Gestänge eine vordere Schiene (16), eine mittlere Schiene (18), eine hintere Schiene (22) und eine Mehrzahl von Verbindungsgliedern (34, 50, 56, 62) aufweist, die das Kopfstück (12), die vordere Schiene (16), die mittlere Schiene (18), die hintere Schiene (22) und den Querbügel (14) verbinden, um das Verdeck (10) in einem Z-förmigen Faltvorgang derart zu einer kompakten Form im Aufbewahrungsfach zusammenzufalten, dass das Kopfstück (12) nicht umgedreht wird, das zusammengefaltete Verdeck (10) bedeckt und die Karosserieöffnung schließt,
**dadurch gekennzeichnet, dass**
die mittlere und die hintere Schiene (18, 22) während des Faltvorgangs umgedreht werden.

2. Cabrioverdeck nach Anspruch 1, wobei jedes Seitengestänge eine Viergelenkverbindung aufweist, um die Z-förmige Faltung zu erzielen.

3. Cabrioverdeck nach Anspruch 1, wobei jedes Seitengestänge zwei Viergelenkverbindungen aufweist, um den Z-förmigen Faltvorgang zu ermöglichen.

4. Cabrioverdeck nach Anspruch 1, wobei jedes Seitengestänge drei Viergelenkverbindungen aufweist.

5. Cabrioverdeck nach einem der vorangehenden Ansprüche, mit einer Leerlaufverbindung zwischen einer Seitenschiene und dem Kopfstück (12), um eine relative seitliche Bewegung während des Faltens und Ausfahrens des Verdecks (10) zu ermöglichen.

6. Cabrioverdeck nach einem der vorangehenden Ansprüche, wobei die vordere Schiene (16) am Kopfstück (12) befestigt ist, die mittlere Schiene (18) schwenkbar mit dem Kopfstück (12) verbunden ist, die hintere Schiene (22) schwenkbar mit dem Fahrzeug und mit einem oberen und einem unteren Verbindungsglied (56, 50) verbunden ist, die beabstandet voneinander angeordnet sind und die mittlere und die hintere Schiene (18, 22) verbinden, so dass eine Viergelenkverbindung gebildet wird.

7. Cabrioverdeck nach einem der Ansprüche 3 bis 6, wobei jedes Seitengestänge einen oberen Steuerungsarm (62) aufweist, der das obere Verbindungsglied (56) und das Kopfstück (12) verbindet, um eine zweite Viergelenkverbindung zu bilden.

8. Cabrioverdeck nach einem der Ansprüche 4 bis 7, wobei jedes Seitengestänge einen unteren Steuerungsarm (34) aufweist, der das mittlere Verbindungsglied (50) und die Fahrzeugkarosserie verbindet, und ein unteres Verbindungsglied (42), das die hintere Schiene (22) und den unteren Steuerungsarm (34) verbindet, um eine dritte Viergelenkverbindung zu bilden.

## Revendications

1. Capote (10) mobile à travers une ouverture de carrosserie entre une position élevée, recouvrant le compartiment passager de la carrosserie de véhicule, et une position abaissée pliée dans un compartiment de rangement dans la carrosserie de véhicule, ladite capote comportant un élément de tête (12) pour venir en prise avec le pare-brise de véhicule dans une position élevée de la capote, et une paire de tringleries latérales et au moins un arc transversal (14) s'étendant entre les tringleries latérales, chaque tringlerie comportant un rail avant (16), un rail médian (18), un rail arrière (22) et une pluralité de tringles (34, 50, 56, 62) reliant l'élément de tête (12), le rail avant (16), le rail médian (18), le rail arrière (20) et les arcs transversaux (14) pour plier la capote (10) en une action de pliage en forme de Z vers une forme compacte dans le compartiment de rangement, de telle sorte que l'élément de tête (12) n'est pas renversé et recouvre la capote pliée (10), et ferme l'ouverture de carrosserie,
**caractérisée en ce que**
les rails médian et arrière (18, 22) sont renversés pendant l'action de pliage.

2. Capote selon la revendication 1, dans laquelle chaque tringlerie latérale comporte une tringlerie à 4 barres pour exécuter le pli en forme de Z.

3. Capote selon la revendication 1, dans laquelle chaque tringlerie latérale comporte deux tringleries à 4 barres pour permettre l'action de pliage en Z.

4. Capote selon la revendication 1, dans laquelle chaque tringlerie latérale comporte trois tringleries à 4 barres.

5. Capote selon l'une des revendications précédentes, comportant une liaison à mouvement à vide entre un rail latéral et l'élément de tête (12) pour permettre un déplacement latéral relatif pendant le pliage et le dépliage de la capote (10).

6. Capote selon l'une des revendications précédentes, dans laquelle le rail avant (16) est monté sur l'élément de tête (12), le rail médian (18) est pivoté par rapport à l'élément de tête (12), le rail arrière (22) est relié de manière pivotante au véhicule et à des tringles de liaison supérieure et médiane (56, 50) espacées reliant mutuellement les rails avant et arrière (18, 22) pour former une tringlerie à 4 barres.

7. Capote selon l'une des revendications 3 à 6, dans laquelle chaque tringlerie latérale comporte un bras de commande supérieur (62) reliant mutuellement la tringle de liaison supérieure (56) et l'élément de tête (12) pour former une deuxième tringlerie à 4 barres.

8. Capote selon l'une des revendications 4 à 7, dans laquelle chaque tringlerie latérale comporte un bras de commande inférieur (34) reliant la tringle de liaison médiane (50) et la carrosserie de véhicule, et une tringle de liaison inférieure (42) reliant le rail arrière (22) et le bras de commande inférieur (34) pour former une troisième tringlerie à 4 barres.
